# EUROPÄISCHE PATENTANMELDUNG

(11) **EP 1 916 747 A1**
(43) Veröffentlichungstag der Anmeldung: **30.04.2008**
(21) Anmeldenummer: 07017346.3
(22) Anmeldetag: 05.09.2007
(51) Int. Cl.: H01R 13/504, H01R 13/58, H01R 43/24, B29C 45/14

(54) **Verfahren zur Herstellung eines Steckverbinders mit Zugentlastung und ein nach diesem Verfahren hergesteller Steckverbinder**

(30) Priorität: 25.10.2006 DE 102006040690
(71) Anmelder: Hirschmann Automation and Control GmbH, 72654 Neckartenzlingen (DE)
(72) Erfinder: Pawlicki, Andreas, 73235 Weilheim (DE)
(74) Vertreter: Dietrich, Barbara

(57) **Zusammenfassung**

Die Erfindung betrifft ein Verfahren zur Herstellung eines zugentlasteten Steckverbinders (1), der an einem Ende eines Kabels (2) angeordnet ist und ein Steckverbindergehäuse (3) aufweist, wobei das Steckverbindergehäuse (3) in einem Kunststoff-Spritzgussverfahren hergestellt wird, wobei erfindungsgemäß vorgesehen ist, dass ein Zugentlastungselement (6) auf der Oberfläche des Kabels (2) angeordnet wird, danach der mit dem Zugentlastungselement (6) versehene Endbereich des Kabels (2) in ein Spritzguss-Werkzeug eingelegt und anschließend umspritzt wird, wobei während des Spritzvorganges ein Druck auf das Zugentlastungselement (6) ausgeübt wird, sowie einen nach diesem Verfahren hergestellten Steckverbinder.

## Beschreibung

Die Erfindung betrifft ein Verfahren zur Herstellung eines zugentlasteten Steckverbinders sowie einen nach diesem Verfahren hergestellten Steckverbinder, gemäß den Merkmalen des Oberbegriffes des jeweiligen unabhängigen Patentsanspruches.

Es ist bekannt, dass Steckverbinder am Ende eines Kabels angeordnet sind. Dabei ist es erforderlich, dass die Steckverbinder, wie Stecker, Kuppler oder dergleichen, mit einer Zugentlastung versehen sind, um die auf den Steckverbinder wirkenden Zug- oder auch Druckkräfte aufzunehmen und damit die Kontaktpartner innerhalb des Steckverbinders von diesen wirkenden Kräften zu entlasten, um Beeinträchtigungen, insbesondere in Form von Unterbrechungen, auf die elektrische Kontaktierung zu vermeiden. Hierzu ist es schon bekannt geworden (insbesondere in der Elektroinstallation), dass ein Steckverbindergehäuse des Steckverbinders einen mit dem Steckverbindergehäuse verschraubbaren Querriegel aufweist, der über den Endbereich des Kabels angeordnet wird und der nach seine Verschraubung eine Druckkraft auf den Kabelmantel ausübt. Mit einem solchen Querriegel sind zwar die erforderlichen Druckkräfte zur Erzielung der gewünschten Zugentlastung realisierbar, allerdings ist der Nachteil gegeben, dass es sich um separate Bauteile handelt, die an dem Steckverbindergehäuse angeordnet werden müssen. Dabei besteht die Gefahr, dass die Montage dieser Zugentlastungsmittel vergessen wird, wobei in diesem Fall keine Zugentlastung gegeben ist. Neben dem zusätzlichen Montageaufwand ist außerdem ein höherer Teileaufwand in nachteiliger Weise gegeben.

Weiterhin ist es bei Steckverbindern schon bekannt geworden, das Steckverbindergehäuse in einem Kunststoff-Spritzgussverfahren herzustellen, wobei gleichzeitig mit dem Spritzgussvorgang der Endbereich des Kabels mit in das Spritzguss-Werkzeug eingelegt wird und ebenfalls mit dem gleichen Material wie das Material des Steckverbindergehäuses umspritzt wird. Dies hat allerdings den Nachteil, dass das fertige Steckverbindergehäuse keine ausreichende Verbindung mit dem Material des Kabelmantels eingeht, da die Anforderungen an das Material des Steckverbindergehäuses von den Anforderungen an das Material des Kabelmantels abweichen. Denn im Regelfall soll das Steckverbindergehäuse stabil sein, während der Kabelmantel aus einem möglichst elastisch verformbaren Material zur Erzielung der gewünschten Flexibilität bestehen. Dies hat jedoch zur Folge, dass lediglich ein geringer und noch nicht zufrieden stellender Zugentlastungseffekt erreicht wird.

Der Erfindung liegt daher die Aufgabe zu Grunde, ein Verfahren zur Herstellung eines zugentlastenden Steckverbinders sowie einen nach diesem Verfahren hergestellten Steckverbinder anzugeben, das die eingangs geschilderten Nachteile vermeidet. Insbesondere soll unter Erzielung einer ausreichend hohen Zugentlastung die Herstellung bzw. Montage eines entsprechenden Steckverbinders vereinfacht und die Teilevielfalt reduziert werden.

Diese Aufgabe ist durch die Merkmale des jeweiligen unabhängigen Patentanspruches gelöst.

Bei dem erfindungsgemäßen Herstellungsverfahren ist erfindungsgemäß vorgesehen, dass ein Zugentlastungselement auf der Oberfläche des Kabels (auf dem Kabelmantel) angeordnet wird, wobei danach der mit dem Zugentlastungselement versehene Endbereich des Kabels in ein Spritzguss-Werkzeug eingelegt und anschließend umspritzt wird, wobei während des Spritzvorganges ein Druck auf das Zugentlastungselement ausgeübt wird. Durch die Druckausübung auf das Zugentlastungselement wird eine nicht nur während des Spritzgussvorganges, sondern auch danach anhaltende Verformung (Qutschung) des Kabelmantels bewirkt, wobei nach Fertigstellung der Herstellung des Steckverbindergehäuses des Steckverbinders der Effekt gegeben ist, dass der Endbereich des Kabels derart dauerhaft verformt ist, dass die gewünschten Zugentlastungskräfte aufgebracht werden. Das heißt, dass der Endbereich des Kabels mittels des Zugentlastungselementes sowie der Druckausübung auf das Zugentlastungselement während des Spritzvorganges dieser Endbereich zusammengedrückt bzw. derart mit einer Duckkraft beaufschlagt wird, aus der eine entsprechende Zugentlastung im späteren Einsatzbetrieb des Steckverbinders resultiert. Zur Erzielung dieses Druckes auf den Endbereich des Kabels weist das Werkzeug Mittel auf, die während des Spritzgussvorganges auf das Zugentlastungselement drücken. Diese Mittel zur Druckausübung sind beispielsweise als Stege, Stempel oder dergleichen an dem Spritzguss-Werkzeug vorhanden oder als separate Mittel, die während des Spritzvorganges in das Spritzguss-Werkzeug eingeführt werden ausgebildet. Ebenso ist zur weiteren Erhöhung der Zugentlastungskräfte vorgesehen, dass das Zugentlastungselement an seiner Oberfläche, die dem Kabel zugewandt ist, von dieser Oberfläche abstehende Bereiche (wie z.B. Dorne, quer zur Längsrichtung des Kabels ausgerichtete Stege oder dergleichen) aufweist. Mit diesen Mitteln kann sich das Zugentlastungselement in dem Kabelmantel verkrallen, so dass dann, wenn das Zugentlastungselement in Wirkverbindung mit dem Steckverbindergehäuse gebracht worden ist, die auf den Steckverbinder wirkenden Zug- und/oder Druckkräfte von dem Steckverbindergehäuse aufgenommen werden und nicht mehr auf die Kontaktpartner in dem Steckverbinder einwirken können. Je nach Ausgestaltung des Spritzguss-Werkzeuges oder der zusätzlichen Mittel, die den Druck während des Spritzgussvorganges auf das Zugentlastungselement ausüben, ist es denkbar, dass diese Mittel zumindest teilweise, insbesondere aber vollständig auf die Oberfläche des Zugentlastungselementes den Druck ausüben. Von besonderem Vorteil ist es, dass die Mittel, die den Druck auf das Zugentlastungselement ausüben, derart an dem Spritzguss-Werkzeug angeordnet oder in dieses eingeführt werden, dass sie auf die von der Oberfläche des Zugentlastungselementes abstehenden Bereich wirken.

Ein Beispiel eines nach einem solchen Verfahren hergestellten zugentlasteten Steckverbinders, auf dass die Erfindung jedoch nicht beschränkt ist, ist im Folgenden beschrieben und anhand der Figuren erläutert.

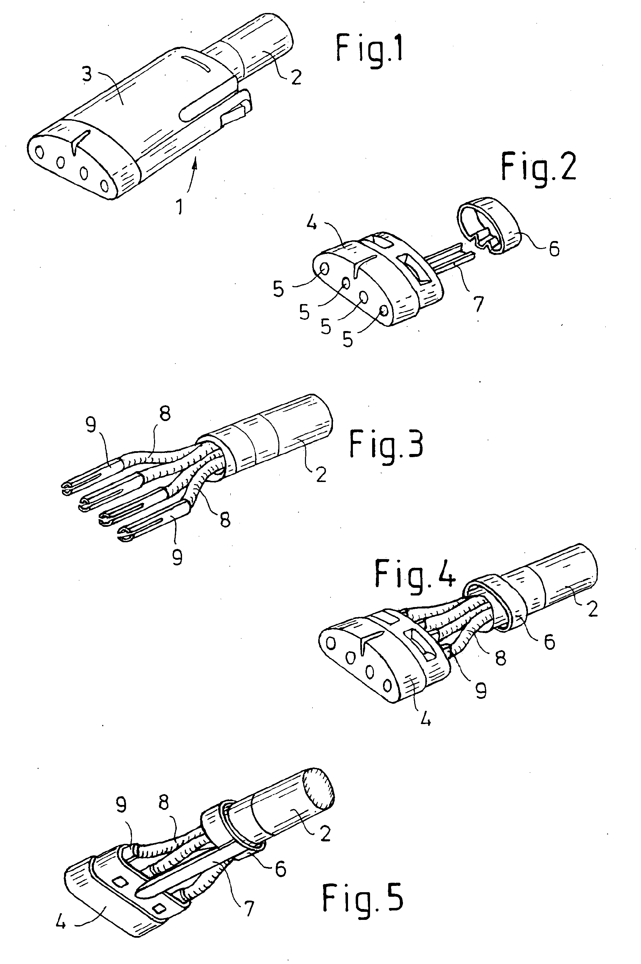

Die Figuren 1 bis 4 zeigen, soweit im Einzelnen dargestellt, einen mit 1 bezeichneten Steckverbinder, der als Stecker oder Kuppler ausgebildet sein kann. Dieser Steckverbinder 1 ist im Endbereich eines Kabels 2 angeordnet und weist ein Steckverbindergehäuse 3 auf. Damit ist ein fertiger, zugentlasteter Steckverbinder 1 dargestellt, dessen Herstellung im Folgenden beschrieben wird.

Figur 2 zeigt einen Kontaktträger 4 mit Kontaktkammern 5 sowie einem erfindungsgemäßen Zugentlastungselement 6, das die in diesem Ausführungsbeispiel über ein Verbindungselement 7 (Steg) mit dem Kontaktträger 4 verbunden ist. Eine solche in Figur 2 gezeigte Ausgestaltung hat den Vorteil, dass sie ihrerseits in einem entsprechend gestalteten Spritzguss-Werkzeug mittels eines Kunststoff-Spritzguss-Verfahrens hergestellt werden kann. Die Anordnung des Zugentlastungselementes 6 über das Verbindungselement 7 an dem Kontaktträger 4 hat den Vorteil, dass nur dieses eine Bauteil in das Spritzguss-Werkzeug zur Herstellung des Steckverbinders 1 eingelegt werden muss und die Teilevielfalt reduziert wird. Außerdem ist das Zugentlastungselement 6 verliersicher an dem Kontaktträger 4 angeordnet und kann daher bei der Herstellung nicht vergessen werden.

Figur 3 zeigt den Endbereich des Kabels 2, das eine oder vorzugsweise mehrere elektrische Leitungen 8 aufweist, an deren Ende entsprechend Kontaktpartner 9 angeordnet sind. Die Kontaktpartner 9 können beispielsweise durch Löten, Verkrimpen oder dergleichen am Ende der zugehörigen elektrischen Leitung befestigt werden. Nachdem der Endbereich des Kabels 2 entsprechend der Gestaltung der Figur 3 vorbereitet worden ist, wird dieser mit dem Kontaktträger 4 gemäß Figur 2 in Verbindung gebracht. Dieser nächste Verfahrensschritt ist in Figur 4 dargestellt. Dabei sind die Kontaktpartner 9 durch das Zugentlastungselement 6 hindurch in Richtung der Kontaktkammern 5 des Kontaktträger 4 geführt und dort angeordnet worden. Dabei sind die Geometrien der beteiligten Bauelemente so gewählt worden, dass das in diesem Fall ringförmige Zugentlastungselement 6 im Endbereich des Kabelmantels des Kabels 2 zur Anlage kommt. Im Falle des gezeigten Rundkabels in Figur 3 und 4 ist der Innendurchmesser des Zugentlastungselementes 6 geringfügig größer gewählt als der Außendurchmesser des Kabelmantels, um die Kontaktpartner 9 sowie den Endbereich des Kabelmantels des Kabels 2 ohne Probleme durch das Zugentlastungselement 6 in Richtung des Kontaktträgers 4 bewegen zu können.

Nach der beschriebenen und gezeigten Vorbereitung wird die in Figur 4 gezeigte Einheit in ein nicht dargestellte Spritzguss-Werkzeug eingelegt und anschließend umspritzt. Dabei hat das Spritzguss-Werkzeug eine Innenkontur, die der Außenkontur des Steckverbindergehäuses 3 entspricht. Das Spritzguss-Werkzeug seinerseits weist Mittel auf, die während des Spritzgussvorganges zumindest teilweise, insbesondere vollständig auf die Oberfläche des Zugentlastungselementes 6 Druck ausüben. Alternativ oder ergänzend zu diesen Druckmitteln, die Bestandteil des Spritzguss-Werkzeuges sind, kann daran gedacht werden, zusätzliche Mittel zur Druckausübung auf das Zugentlastungselement 6 in das Spritzguss-Werkzeug einzulegen oder durch entsprechende Öffnungen in diesem Werkzeug zusätzlich einzuführen. Dabei ist es wichtig, dass das Zugentlastungselement 6 verformt, insbesondere zusammengedrückt wird, so dass auch der Kabelmantel des Kabels 2 zusammengedrückt wird. Dabei ist weiterhin in vorteilhafterweise vorgesehen, dass das Zugentlastungselement 6 an seiner Oberfläche, die dem Mantel des Kabels 2 zugewandt ist, von dieser Oberfläche abstehende Bereiche aufweist. Mittels dieser abstehenden Bereiche, die in den Kabelmantel gedrückt werden, wird die Zugentlastung weiter deutlich verbessert. Diese von der Oberfläche des Zugentlastungselementes 6 abstehenden Bereiche sind beispielsweise als quer zur Längsrichtung des Kabels 2 ausgerichtete Stege oder, wie in dem gezeigten Ausführungsbeispiel, Dorne 10 ausgebildet. Dabei ist die von der Oberfläche des Zugentlastungselementes 6 ausgehende Erstreckung dieser Bereiche sowie die Druckausübung auf das Zugentlastungselement 6 so gewählt, dass sich diese Bereiche in den Kabelmantel eindrücken, gleichzeitig aber nicht bis in den Bereich der elektrischen Leitungen 8 (oder deren Ummantelung) vordringen, um Kurzschlüssel zwischen mehreren elektrischen Leitungen 8 zu verhindern. Gleichzeitig sollten diese Bereiche und die Drücke während des Spritzvorganges so gewählt werden, dass die von der Oberfläche des Zugentlastungselementes 6 abstehenden Bereiche so weit in den Kabelmantel eindringen, dass die größtmöglichen Zugentlastungskräfte erzielt werden.

Nachdem der Spritzvorgang beendet ist und das Material des Steckverbindergehäuses 3 ausgehärtet ist, kann der fertig hergestellte zugentlastete Steckverbinder 1 dem Spritzguss-Werkzeug entnommen werden und seiner bestimmungsgemäßen Funktion zugeführt werden.

Alternativ zu der beschriebenen und gezeigten Herstellung des Steckverbinders 1 ist es denkbar, dass Steckverbindergehäuse 3 separat von den übrigen Teilen des Steckverbinders 2 herzustellen und nach der Herstellung des Steckverbindergehäuses 3 die in Figur 4 gezeigte Einheit in das Steckverbindergehäuse 3 einzusetzen. Hierzu weist das Steckverbindergehäuse 3 zumindest zwei oder mehr Teile (insbesondere zwei Hälften) auf, die unter Druckausübung in Wirkverbindung miteinander gebracht werden, wobei bei dieser Druckausübung auch der für die Zugentlastung erforderliche Druck auf das Zugentlastungselement 6 bewirkt wird. Diese Vorgehensweise bietet sich beispielsweise dann an, wenn das mehrteilige Steckverbindergehäuse 3 automatisiert mit der Einheit gemäß Figur 4 automatisiert verbunden wird, da Fertigungsautomaten in der Lage sind, die hierfür erforderliche Druckausübung aufzubringen. Dieses ist zwar grundsätzlich auch manuell, ggf. unter Zuhilfenahme eines Werkzeuges, möglich, wobei aber die automatisierte Montage den Vorteil hat, dass die nötigen Druckkräfte von dem Fertigungsautomaten und nicht manuell aufgebracht werden müssen. Ebenso ist es denkbar, dass der Kontaktträger 4 und das Zugentlastungselement 6 separate Teile sind, die nicht durch ein Verbindungselement 7 miteinander verbunden sind. In diesem Fall werden die beiden Teile 4, 6 jeweils einzeln gehandhabt und die auf den Steckverbinder 1 wirkenden Kräfte von dem Steckverbindergehäuse 3 aufgenommen.

Abschließend sei noch erwähnt, dass die Erfindung sich nicht nur auf Rundkabel, sondern auf beliebige Arten von Kabel, also auch auf Flachbandleitungen oder dergleichen, bezieht. Insbesondere im Falle von Flachbandleitungen, bei der die mehreren elektrischen Leitungen parallel zueinander angeordnet sind, kann daran gedacht werden, dass die von der Oberfläche des Zugentlastungselementes 6 abstehenden Bereiche nicht nur auf die Bereiche zwischen den elektrischen Flachleitungen drücken, sondern diese auch durchstoßen, wenn seinerseits auf das Zugentlastungselement 6 Druck ausgeübt wird.

### Bezugszeichenliste

- 1.: Steckverbinder
- 2.: Kabel
- 3.: Steckverbindergehäuse
- 4.: Kontaktträger
- 5.: Kontaktkammer
- 6.: Zugentlastungselement
- 7.: Verbindungselement
- 8.: elektrische Leitung
- 9.: Kontaktpartner

## Patentansprüche

1. Verfahren zur Herstellung eines zugentlasteten Steckverbinders (1), der an einem Ende eines Kabels (2) angeordnet ist und ein Steckverbindergehäuse (3) aufweist, wobei das Steckverbindergehäuse (3) in einem Kunststoff-Spritzgussverfahren hergestellt wird, **dadurch gekennzeichnet, dass** ein Zugentlastungselement (6) auf der Oberfläche des Kabels (2) angeordnet wird, danach der mit dem Zugentlastungselement (6) versehene Endbereich des Kabels (2) in ein Spritzguss-Werkzeug eingelegt und anschließend umspritzt wird, wobei während des Spritzvorganges ein Druck auf das Zugentlastungselement (6) ausgeübt wird.

2. Verfahren nach Anspruch 1, **dadurch gekennzeichnet, dass** das Werkzeug Mittel aufweist oder mit Mitteln in Verbindung bringbar ist, die während des Spritzgussvorganges auf das Zugentlastungselement (6) drücken.

3. Verfahren nach Anspruch 2, **dadurch gekennzeichnet, dass** die Mittel zumindest teilweise, insbesondere vollständig, auf die Oberfläche zu Zugentlastungselementes (6) Druck ausüben.

4. Steckverbinder (1), hergestellt nach einem der Verfahren gemäß den vorhergehenden Patentansprüchen.

5. Steckverbinder (1) nach Anspruch 4, **dadurch gekennzeichnet, dass** das Zugentlastungselement (6) eine Innenkontur aufweist, die in etwa der Außenkontur des Endbereiches des Kabels (2) entspricht.

6. Steckverbinder (1) nach Anspruch 4 oder 5, **dadurch gekennzeichnet, dass** der Steckverbinder (1) einen Kontaktträger (4) mit Kontaktkammern (5) zur Aufnahme von Kontaktpartnern (9) aufweist, wobei das Zugentlastungselement (6) über ein Verbindungselement (7) mit dem Kontaktträger (4) verbunden ist.

7. Steckverbinder (1) nach Anspruch 4 oder 5, **dadurch gekennzeichnet, dass** der Steckverbinder (1) einen Kontaktträger (4) mit Kontaktkammern (5) zur Aufnahme von Kontaktpartnern (9) aufweist, wobei der Kontaktträger (4) und das Zugentlastungselement (6) Einzelteile sind und über das umspritzte Steckverbindergehäuse (3) nach dem Spritzgussvorgang miteinander verbunden sind.

8. Steckverbinder (1) nach einem der Ansprüche 4 bis 7, **dadurch gekennzeichnet, dass** das Zugentlastungselement (6) an seiner Oberfläche, die dem Kabel (2) zugewandt ist, von dieser Oberfläche abstehende Bereiche aufweist.

9. Steckverbinder (1) nach Anspruch 8, **dadurch gekennzeichnet, dass** diese Bereiche als Dorne (10) ausgebildet sind.

10. Steckverbinder (1) nach Anspruch 8 oder 9, **dadurch gekennzeichnet, dass** diese Bereiche als quer zur Längsrichtung des Kabels (2) ausgerichtete Teilstege oder als ein quer zur Längsrichtung des Kabels (2) vollständig radial umlaufender Steg ausgebildet sind/ist.
